# EUROPÄISCHE PATENTSCHRIFT

(11) **EP 2 333 303 B1**
(45) Veröffentlichungstag und Bekanntmachung des Hinweises auf die Patenterteilung: **11.06.2014**
(21) Anmeldenummer: 10193780.3
(22) Anmeldetag: 06.12.2010
(51) Int. Cl.: F02M 59/46, F02M 63/02, F16K 31/06, F02M 63/00

(54) **Druckregelventil zur Regelung des Drucks in einem Hochdruck-Kraftstoffspeicher einer Brennkraftmaschine**
Pressure regulating valve for regulating the pressure in a high pressure fuel reservoir of a combustion engine
Soupape de réglage de pression pour le réglage de la pression dans un accumulateur de carburant haute pression d'un moteur à combustion interne

(30) Priorität: 08.12.2009 DE 102009047649
(43) Veröffentlichungstag der Anmeldung: 15.06.2011
(73) Patentinhaber: Robert Bosch GmbH, 70442 Stuttgart (DE)
(72) Erfinder: Roth, Brigitte, 71332, Waiblingen (DE)

(56) Entgegenhaltungen:
- DE-B3-102005 061 362
- US-A- 4 844 119
- US-A- 5 467 797
- US-A1- 2011 203 682

## Beschreibung

Die Erfindung betrifft ein Druckregelventil zur Regelung des Drucks in einem Hochdruck-Kraftstoffspeicher einer Brennkraftmaschine, insbesondere in Common-Rail-Einspritzsystemen, mit den Merkmalen des Oberbegriffs des Anspruchs 1. Ein solches Druckregelventil weist einen in einer Bohrung axial verschiebbar geführten Ventilkolben auf, der auf ein Ventildichtelement einwirkt, so dass das Ventildichtelement gegen einen Ventilsitz gedrückt wird oder vom Ventilsitz zum Öffnen des Druckregelventils abheben kann. Der sich einstellende Druck ist dabei eine Funktion des Ventilhubes. Die axiale Verschiebung des Ventilkolbens innerhalb der Bohrung wird durch eine Magnetspule bewirkt, die bei Bestromung den Ventilkolben in Richtung des Ventilsitzes, d.h. in Schließrichtung bewegt. Dabei wird die Druckkraft einer Feder überwunden, die den Ventilkolben in Öffnungsrichtung beaufschlagt.

### Stand der Technik

Druckregelventile zur Regelung des Drucks in einem Hochdruck-Kraftstoffspeicher, die insbesondere in Common-Rail-Einspritzsystemen Einsatz finden, haben zum Schutz von Mensch und Umgebung bestimmte Sicherheitsanforderungen zu erfüllen. Beispielsweise muss gewährleistet sein, dass bei Steuergeräte- und/oder Spannungsversorgungsfehlern eine Druckbegrenzung auf einen zulässigen maximalen Grenzwert erfolgt. Des Weiteren sollte bei einem Spannungsverlust, beispielsweise bei einem Kabelbruch oder durch einen Marderschaden, sichergestellt werden, dass weiterhin Raildruck aufgebaut werden kann, um einen Notfahrbetrieb zu ermöglichen (sogenannte Limphome-Funktion).

Bei "stromlos offenen" Ventilen, die häufig in Common-Rail-Einspritzsystemen von Personenkraftwagen zum Einsatz gelangen, ist eine Druckbegrenzungsfunktion dadurch in einfacher Weise realisierbar, dass das Ventil bei einem Spannungsverlust öffnet. Die Offenstellung des Ventils bei einem Spannungsverlust hat jedoch ferner zur Folge, dass in der Regel kein ausreichender Raildruck aufgebaut werden kann, um einen Notfahrbetrieb zu ermöglichen.

Bei "stromlos geschlossenen" Ventilen ist der Wirksinn umgekehrt. Das heißt, dass das Ventil bei einem Spannungsverlust geschlossen ist. Das Schließen des Ventils wird durch eine starke Feder bewirkt, die den Ventilkolben in Schließrichtung beaufschlagt. Die Federkraft der Feder ist derart ausgelegt, dass sie eine Verstellung des Ventilkolbens entgegen dem Druck im Hochdruck-Kraftstoffspeicher ermöglicht. Zum Öffnen des Ventils wird eine Magnetspule bestromt, deren Magnetkraft der Schließkraft der Feder entgegenwirkt. Bei einem Spannungsverlust ist somit eine Schließstellung des Ventils und damit eine Notfahrbetrieb gewährleistet. Aufgrund des Ausfalls der Regelfunktion kann der Druck im Hochdruck-Kraftstoffspeicher jedoch derart ansteigen, dass der zulässige Systemdruck überschritten wird. Des Weiteren können die Temperaturen im Kraftstoffrücklauf des Druckregelventils auf Werte über 200° C ansteigen. Nicht nur die Systemkomponenten können dabei Schaden nehmen, sondern Mensch und Umgebung können zudem gefährdet sein. Daher erfordern stromlos geschlossene Druckregelventile, wie sie häufig in Common-Rail-Einspritzsystemen von Nutzfahrzeugen eingesetzt werden, regelmäßig den Einsatz eines zusätzlichen Druckbegrenzungsventils, um den Sicherheitsanforderungen gerecht zu werden.

Aus der Offenlegungsschrift DE 103 34 615 A1 ist ein stromlos offenes Druckregelventil bekannt, das bei Ausfall einer elektromagnetischen Schließkraft einen Mindestdruck am Ventilausgang und damit einen Notfahrbetrieb ermöglichen soll. Hierzu ist der Öffnungsquerschnitt des Zulaufs des Druckregelventils derart ausgelegt, dass sich das Druckregelventil erst ab einem vorgegebenen Mindestkraftstoffdruck öffnet. Alternativ wird ein Drosselelement im Bereich des Zulaufs zur Regelung eines Mindestdrucks vorgeschlagen, ab dem sich das Druckregelventil öffnet.

Ein weiteres Druckregelventil ist aus der US 5,467,797 A bekannt.

Der vorliegenden Erfindung liegt die Aufgabe zu Grunde, ein Druckregelventil zur Regelung des Drucks in einem Hochdruck-Kraftstoffspeicher bereitzustellen, das ebenfalls einen Notfahrbetrieb bei einem Spannungsverlust ermöglicht. Ferner soll eine Druckbegrenzungsfunktion realisierbar sein. Schließlich soll das vorgeschlagene Druckregelventil auch einen Volumenausgleich bei Motorstillstand ermöglichen.

Zur Lösung der Aufgabe wird ein Druckregelventil mit den Merkmalen des Anspruchs 1 vorgeschlagen. Vorteilhafte Weiterbildungen der Erfindung werden in den direkt oder indirekt auf Anspruch 1 rückbezogenen Unteransprüchen angegeben.

### Offenbarung der Erfindung

Das vorgeschlagene Druckregelventil umfasst einen in einer Bohrung axial verschiebbar geführten und von der Druckkraft einer Feder in Öffnungsrichtung beaufschlagten Ventilkolben, der bei Bestromung eine Magnetspule entgegen der Druckkraft der Feder und entgegen den im Hochdruck-Kraftstoffspeicher herrschenden Druck eine axiale Verschiebung in Richtung eines ersten Ventilsitzes erfährt. Dabei wirkt der Ventilkolben auf ein mit dem Ventilsitz zusammenwirkendes Ventildichtelement ein. Zur Realisierung einer Notfahrt ist ein zweiter, in einer Ventilplatte ausgebildeter Ventilsitz vorgesehen, der mit dem Ventildichtelement in der Weise zusammenwirkt, dass bei fehlender Bestromung der Magnetspule der im Hochdruck-Kraftstoffspeicher herrschende Druck das Ventildichtelement in dichtender Anlage mit dem zweiten Ventilsitz hält. In Anlage mit dem zweiten Ventilsitz gewährleistet das Ventildichtelement, dass das Druckregelventil im stromlosen Zustand bei laufendem Motor geschlossen ist, so dass im Hochdruck-Kraftstoffspeicher ein ausreichender Druck aufgebaut werden kann, der eine Einspritzung gewährleistet. Der Schließvorgang wird dabei nicht über den Ventilkolben, sondern über den Druck im Hochdruck-Kraftstoffspeicher bewirkt. Denn bei fehlender Bestromung der Magnetspule vermag der Ventilkolben das Ventildichtelement nicht in Anlage mit dem ersten Ventilsitz zu halten, so dass das Ventildichtelement von dem ersten Ventilsitz abhebt und Kraftstoff aus dem Hochdruck-Kraftstoffspeicher über den ersten Ventilsitz ausströmt. Der ausströmende Kraftstoff hat wiederum zu Folge, dass das Ventildichtelement gegen den zweiten Ventilsitz gedrückt wird, so dass der Kraftstoff am weiteren Abfließen gehindert wird. Der zweite Ventilsitz ist demnach bevorzugt dem ersten Ventilsitz gegenüberliegend angeordnet, wobei zwischen den beiden Ventilsitzen ein Bewegungsraum für das Ventildichtelement verbleibt.

Zur Realisierung einer Druckbegrenzungsfunktion wird erfindungsgemäß vorgeschlagen, dass die Ventilplatte, in welcher der zweite Ventilsitz ausgebildet ist, in der Bohrung des Druckregelventils axial verschiebbar geführt und von der Druckkraft einer Feder in Richtung des ersten Ventilsitzes beaufschlagt ist. Die Druckkraft der Feder gibt dabei einen maximalen Grenzdruck vor, dessen Überschreitung zu einer axialen Verschiebung der Ventilplatte und damit zum Öffnen des Ventils über den zweiten Ventilsitz führt. Das Ventildichtelement vermag der axialen Verschiebung der Ventilplatte nicht zu folgen, da der Ventilkolben das Ventildichtelement in einer zum zweiten Ventilsitz beabstandeten Position hält. Somit ist auch eine Druckbegrenzungsfunktion bei fehlender Bestromung der Magnetspule gewährleistet.

Zur Realisierung einer Volumenausgleichsfunktion bei fehlender Bestromung der Magnetspule ist vorzugsweise das Ventildichtelement frei beweglich zwischen den beiden Ventilsitzen angeordnet. Vorzugsweise sind hierzu beide Ventilsitze koaxial und axial beabstandet zueinander angeordnet, wobei der axiale Abstand zwischen beiden Ventilsitzen den Bewegungsraum des Ventildichtelementes definiert. Der axiale Bewegungsfreiraum des Ventildichtelementes wird lediglich durch eine axiale Verschiebung des Ventilkolbens bei Bestromung der Magnetspule zur Ausübung der Regelfunktion des Druckregelventils eingeschränkt. Dabei liegt das Ventildichtelement am Ventilkolben an, so dass die axiale Lage des Ventildichtelementes über den Ventilkolben vorgebbar ist. Liegt das Ventildichtelement an keinem der beiden Ventilsitze an, kann Kraftstoff aus dem Hochdruck-Kraftstoffspeicher über den ersten Ventilsitz ausströmen und am Ventildichtelement vorbei über den zweiten Ventilsitz einem Entlastungsraum bzw. einem Rücklauf zugeführt werden.

Die in der Bohrung des Druckregelventils axial verschiebbar geführte Ventilpatte weist vorzugsweise eine zentrale Bohrung zur Aufnahme eines Teilabschnittes des Ventilkolbens auf. Die zentrale Bohrung ist derart ausgeführt, dass eine axiale Verschiebung des Ventilkolbens unabhängig von der axialen Lage der Ventilplatte gewährleistet ist. Gleiches gilt im Hinblick auf die Ventilplatte, die sich un-abhängig von der jeweiligen axialen Lage des Ventilkolbens bewegen kann. Somit können neben der Regelfunktion des Druckregelventils auch die Sicherheitsfunktionen Notfahrbetrieb und Druckbegrenzungsfunktion realisiert werden. Bei Motorstillstand und fehlender Bestromung der Magnetspule wird zugleich eine Volumenausgleichsfunktion ermöglicht, indem sich das Ventildichtelement uneingeschränkt zwischen den beiden sich gegenüberliegenden Ventilsitzen bewegen kann.

Die in der Bohrung des Druckregelventils axial verschiebbar geführte Ventilplatte ist weiterhin vorzugsweise mit einer Beißkante zur dichtenden Anlage an einem Gehäuseteil oder einer weiteren Ventilplatte des Druckregelventils ausgestattet. Die Beißkante begrenzt vorzugsweise einen ersten Entlastungsraum, der beim Öffnen des Druckregelventils über den ersten Ventilsitz einen ersten Druckausgleich realisiert. Übersteigt der Druck im ersten Entlastungsraum einen maximalen Grenzdruck, der über die Druckkraft der die Ventilplatte beaufschlagenden Feder vorgegeben ist, wird eine axiale Verschiebung der Ventilplatte und damit ein Öffnen des Druckregelventils über den zweiten Ventilsitz bewirkt. Der über die Beißkante der Ventilplatte ausgebildete Dichtsitz bildet somit eine Druckstufe aus. Denn bei Ausübung der Druckbegrenzungsfunktion hebt zunächst das Ventildichtelement vom ersten Ventilsitz und danach die axial verschiebbar geführte Ventilplatte von dem Gehäuseteil bzw. der weiteren Ventilplatte ab, so dass über den ersten Ventilsitz ein erster Entlastungsraum und über den zweiten Ventilsitz ein weiterer, vorzugsweise an einen Rücklauf angeschlossener Entlastungsraum geöffnet wird. Das Ventildichtelement vermag der axialen Bewegung der Ventilplatte nur soweit zu folgen, bis es in Anlage mit dem Ventilkolben gelangt. Der Dichtsitz der Ventilplatte erfordert nicht notwendigerweise die Ausbildung einer Beißkante. Der Dichtsitz kann auch in anderer Weise ausgebildet sein. Eine Beißkante kann jedoch zur radialen Begrenzung eines Entlastungsraums herangezogen werden, der zugleich einen axialen Abstand zwischen beiden Ventilsitzen und damit einen Bewegungsfreiraum für das Ventildichtelement schafft.

Ist eine weitere Ventilplatte vorgesehen, an der die axial verschiebbar geführte Ventilplatte anliegt, ist vorzugsweise der erste Ventilsitz in der weiteren Ventilplatte ausgebildet. Zur Ausbildung eines Dichtsitzes zwischen beiden Ventilplatten kann auch die weitere Ventilplatte mit einer Beißkante ausgestattet sein. Die vorzugsweise in den beiden Ventilplatten ausgebildeten, sich gegenüberliegenden Ventilsitze können in Abhäniggkeit von der Form des Ventildichtelementes als Flachsitz oder kegelförmig ausgebildet sein. Dabei kann sich die Form der sich gegenüberliegenden Ventilsitze auch unterscheiden.

Gemäß einer bevorzugten Ausführungsform ist das Ventildichtelement als Kugel ausgebildet. Die Kugelform gewährleistet eine gleichbleibende Dichtkontur unabhängig von der Lage des Ventildichtelementes. Alternativ kann das Ventildichtelement aber auch eine andere Geometrie aufweisen.

Gemäß einer weiteren bevorzugten Ausführungsform sind ferner Einstellelemente vorgesehen, die vorzugsweise eine Einstellung des Öffnungsdrucks, des Restluftspaltes und/oder des Hubanschlags ermöglichen. Die Einstellelemente weisen vorzugsweise die Form einer Einstellscheibe oder einer Einstellschraube auf. Eine Einstellscheibe kann beispielsweise zur Einstellung der axialen Lage einer Ventilplatte vorgesehen sein. Über eine Einstellschraube ist vorteilhafterweise die axiale Lage des Ventilkolbens einstellbar. Die Anordnung einer solchen Einstellscheibe erfolgt demnach vorzugsweise in der Bohrung des Druckregelventils, während die Einstellschraube vorzugsweise deckelseitig zur Ausbildung eines Hubanschlages für den Ventilkolben angeordnet ist.

Weiterhin vorzugsweise ist vorgesehen, dass die elektrischen Anschlüsse zur Bestromung der Magnetspule ebenfalls im Deckel des Druckregelventils angeordnet sind.

Eine bevorzugte Ausführungsform der Erfindung wird nachfolgend anhand der beigefügten Zeichnungen näher erläutert. Diese zeigen:
- Figur 1: einen Längsschnitt durch ein erfindungsgemäßes Druckregelventil,
- Figur 2: das Ventil der Figur 1 in geschlossenem Zustand,
- Figur 3: das Ventil der Figur 2 in Regelfunktion,
- Figur 4: das Ventil der Figur 1 in Limphome-Funktion,
- Figur 5: das Ventil der Figur 1 in Druckbegrenzungsfunktion und

- Figur 6: das Ventil der Figur 1 in Volumenausgleichsfunktion.

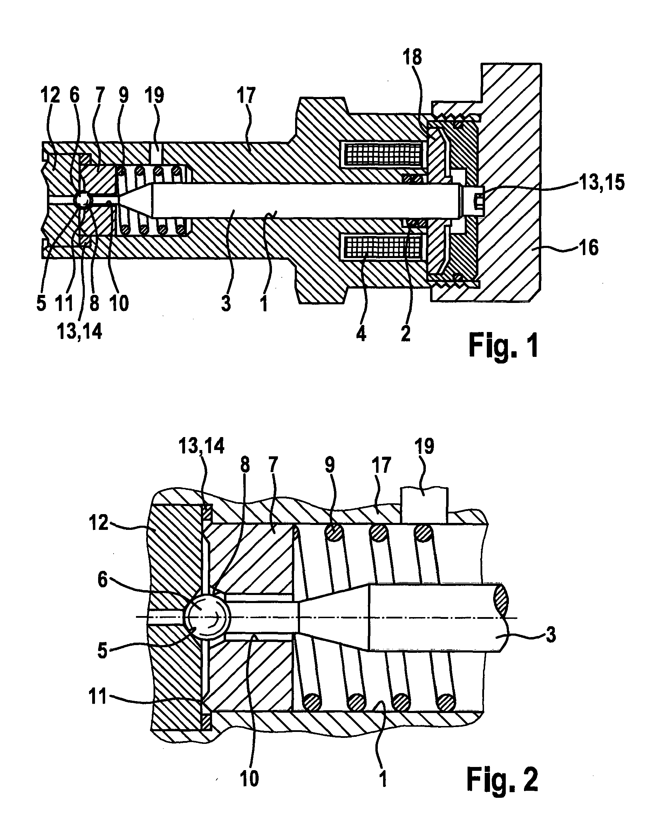

Der Darstellung der Figur 1 ist der Aufbau eines bevorzugten Ausführungsbeispiels eines erfindungsgemäßen Druckregelventils zu entnehmen. Innerhalb eines Gehäuses 17 ist eine Bohrung 1 ausgebildet, in der ein Ventilkolben 3 axial verschiebbar geführt ist. Das Gehäuse 17 weist an einem Ende einen Aufnahmeraum für eine Magnetspule 4 auf, der durch einen Deckel 16 verschlossen ist. Die Magnetspule 4 wirkt bei einer Bestromung auf eine Ankerplatte 18 ein, die fest mit dem Ventilkolben 3 verbunden ist. Die axiale Verschiebung des Ventilkolbens 3 wird somit über die Magnetkraft der Magnetspule 4 bewirkt, die den Ventilkolben 3 in Richtung eines ersten Ventilsitzes 5 beaufschlagt. In entgegengesetzter Richtung wird der Ventilkolben 3 von der Druckkraft einer Feder 2 beaufschlagt, die einerseits gehäuseseitig und andererseits an der Ankerplatte 18 des Ventilkolbens 3 abgestützt ist. Bei fehlender Bestromung der Magnetspule 4 stellt die Feder 2 sicher, dass der Ventilkolben 3 in Richtung des Deckels 16 zurückgestellt wird. Eine deckelseitig angeordnete Einstellschraube 15 bildet dabei einen Hubanschlag für den Ventilkolben 3 aus. Durch Drehen der Einstellschraube 15 kann der Hub des Ventilkolbens 3 eingestellt werden.

Der erste Ventilsitz 5 ist in einer Ventilplatte 12 ausgebildet, die in die Bohrung 1 des Druckregelventils eingesetzt ist. Die axiale Lage der Ventilplatte 12 innerhalb der Bohrung 1 wird über eine Einstellscheibe 14 eingestellt. Die Einstellscheibe 14 liegt hierzu an einer Anlageschulter innerhalb der Bohrung 1 an. Ein zweiter Ventilsitz 8 ist in einer Ventilplatte 7 ausgebildet, die axial verschiebbar in der Bohrung 1 geführt ist. Über die Druckkraft einer Feder 9 wird die Ventilplatte 7 in Anlage mit der Ventilplatte 12 gehalten. Die Feder 9 ist hierzu an einer weiteren Anlageschulter innerhalb der Bohrung 1 abgestützt. Die Ventilplatte 7 weist eine zentrale Bohrung 10 auf, durch welche ein Teilabschnitt des Ventilkolbens 3 hindurch geführt ist. Mit diesem Teilabschnitt wirkt der Ventilkolben 3 auf ein Ventildichtelement 6 ein, das frei beweglich zwischen den Ventilsitzen 5 und 8 angeordnet ist. Wird beispielsweise die Magnetspule 4 bestromt, bewegt sich der Ventilkolben 3 in Richtung des ersten Ventilsitzes 5, wobei der durch die Ventilplatte 7 geführte Teilabschnitt des Ventilkolbens 3 in Anlage mit dem Ventildichtelement 6 gelangt, so dass dieses mitgeführt wird. Wird die Bestromung beendet, wird der Ventilkolben 3 über die Feder 2 zurückgestellt, so dass sich das Ventildichtelement 6 wieder frei zwischen beiden Ventilsitzen 5 und 8 bewegen kann. Die Funktionsweise des dargestellten Druckregelventils wird nachfolgend anhand der Figuren 2-6 beschrieben.

Um die in Figur 2 dargestellte Schließstellung einzunehmen, bedarf es der Bestromung der Magnetspule 4, wobei die Magnetkraft der Magnetspule 4 entgegen der Druckkraft der Feder 2 die Ankerplatte 18 an die Magnetspule 4 heranzieht und dabei den Ventilkolben 3 in Richtung des ersten Ventilsitzes 5 bewegt. Der Ventilkolben 2 drückt dabei das Ventildichtelement 6 gegen den ersten Ventilsitz 5. Das Druckregelventil ist somit geschlossen. Um das Ventildichtelement 6 in Anlage mit dem ersten Ventilsitz 5 zu halten, ist die Magnetkraft ausreichend groß zu bemessen. Denn über den Ventilsitz 5 liegt am Ventildichtelement 6 der im Hochdruck-Kraftstoffspeicher herrschende Druck an.

Figur 2 ist zu entnehmen, dass das Ventildichtelement 6 vorliegend die Form einer Kugel besitzt und der auf das Ventildichtelement 6 einwirkende Teilabschnitt des Ventilkolbens 3 endseitig korrespondierend zur Kugelform ausgebildet ist, so dass eine optimale Führung des Ventildichtelements 6 durch den Ventilkolben 3 gegeben ist. Ferner zeigt Figur 2 einen kegelförmig ausgebildeten Ventilsitz 5, so dass eine schmale ringförmige Dichtkontur ausgebildet wird, wenn das Ventildichtelement 6 am Ventilsitz 5 anliegt. In den Bereich des Ventilsitzes 5 mündet ferner ein Zulauf, der das Druckregelventil mit dem Hochdruck-Kraftstoffspeicher verbindet. Der dem Ventilsitz 5 gegenüberliegende Ventilsitz 8 ist ebenfalls kegelförmig ausgebildet und setzt sich in der zentralen Bohrung 10 der Ventilplatte 7 fort, durch welche der Ventilkolben 3 hindurchgeführt ist. Die Ventilplatte 7 ist zudem über eine Beißkante 11 an der Ventilplatte 12 abgestützt, so dass ein Bewegungsraum für das Ventildichtelement 6 zwischen beiden Ventilsitzen 5 und 8 verbleibt.

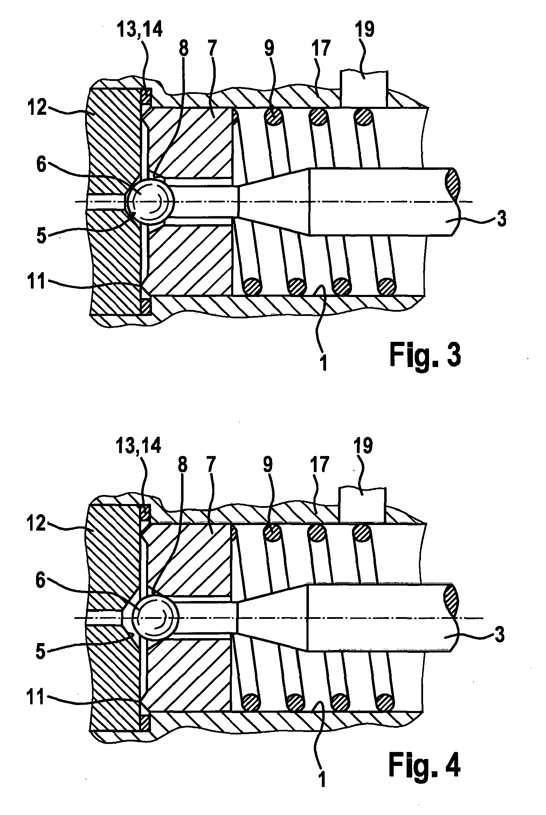

Der zwischen beiden Ventilsitzen 5 und 8 vorhandene Bewegungsraum gewährleistet die in Figur 3 dargestellte Regelfunktion des Druckregelventils. Hierzu wird die Bestromung der Magnetspule 4 derart verändert, dass sich das Ventildichtelement 6 vom ersten Ventilsitz 5 in der Ventilplatte 12 abheben kann. Der Hub wird über die axiale Lage des Ventilkolbens 3 bestimmt. Das Ventildichtelement wird dabei über den Ventilkolben 3 in einer Position zwischen dem ersten Ventilsitz 5 und dem zweiten Ventilsitz 8 gehalten. Der über den ersten Ventilsitz 5 aus dem Kraftstoffspeicher ausströmende Kraftstoff kann um das Ventildichtelement herum und über die zentrale Bohrung 10 in der Ventilplatte 7 einem Rücklauf 19 zugeführt werden.

Bei fehlender Bestromung der Magnetspule 4 wird der Ventilkolben 3 über die Druckkraft der Feder 2 zurück bis an den Anschlag der Einstellschraube 15 gedrückt. Das Ventildichtelement 6 kann sich demnach wieder frei zwischen den Ventilsitzen 5 und 8 bewegen, wobei die Bewegung des Ventildichtelements 6 durch die jeweils herrschenden Druckverhältnisse bestimmt wird. Da im stromlosen Zustand dem im Hochdruck-Kraftstoffspeicher herrschenden Druck kein Gegendruck entgegengesetzt wird, vermag Kraftstoff aus dem Kraftstoffspeicher über den Ventilsitz 5 auszuströmen. Der ausströmende Kraftstoff drückt das Ventildichtelement 6 gegen den zweiten Ventilsitz 8 in der Ventilplatte 7, so das das Druckregelventil wieder geschlossen wird. Dieser Zustand ist in Figur 4 dargestellt. In Anlage mit dem zweiten Ventilsitz 8 wird demnach durch das Ventildichtelement 6 gewährleistet, dass sich im Hochdruck-Kraftstoffspeicher ein Druck aufbauen kann, der Einspritzvorgänge und damit einen Notfahrbetrieb ermöglicht.

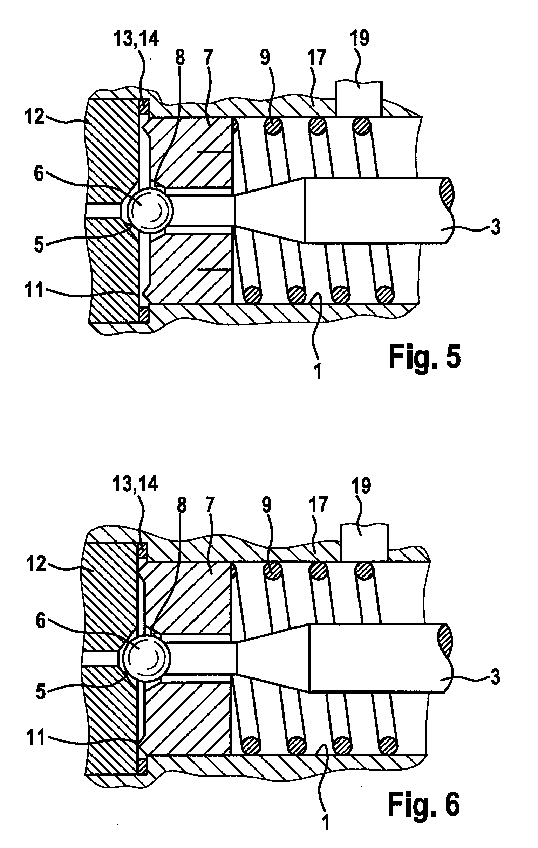

Überschreitet der Druck im Notfahrbetrieb den durch die Feder 9 vorgegebenen maximalen Grenzdruck, wird die Ventilplatte 7 entgegen der Druckkraft der Feder 9 axial verschoben, wobei zunächst die Ventilplatte 7 von der Ventilplatte 12 abhebt und einen ersten, über die Beißkante 11 gebildeten Dichtsitz öffnet. Da sich das Ventildichtelement 6 nur soweit mit bewegt, bis es am Ventilkolben 3 anliegt, bewirkt die weitere axiale Verschiebung der Ventilplatte 7, dass der Ventilsitz 8 geöffnet wird. Dieser Zustand ist in Figur 5 dargestellt. Über die axiale Verschiebung der Ventilplatte 7 wird somit eine Druckbegrenzungsfunktion gewährleistet, die verhindert, dass der Raildruck über einen zulässigen maximalen Grenzdruck steigt.

Bei Motorstillstand kann sich der Kraftstoff im Hochdruck-Kraftstoffspeicher abkühlen und demzufolge sein Volumen verringern, so dass der Druck im Hochdruckbereich unter den Druck im Niederdruckbereich sinkt. In diesem Fall gilt es einen Volumenausgleich zu schaffen. Wie in der Figur 6 dargestellt, vermag sich das Ventildichtelement 6 bei fehlender Bestromung der Magnetspule 4 frei zwischen den Ventilsitzen 5 und 8 zu bewegen. Das Ventildichtelement 6 nimmt dabei eine Position zwischen den beiden Ventilsitzen 5 und 8 ein, so dass über den Ventilsitz 8 Kraftstoff aus dem Niederdruckbereich zurück in den Hochdruckbereich fließen kann. Somit ist auch eine Volumenausgleichsfunktion gewährleistet.

Zur Einstellung des Druckregelventils können Stellelemente 13 vorgesehen sein. Das dargestellte Druckregelventil umfasst hierzu eine Einstellscheibe 14 und eine Einstellschraube 15. Weitere Einstellelemente 13 können darüber hinaus vorgesehen sein.

Das erfindungsgemäße Druckregelventil ist insbesondere für den Einsatz in Common-Rail-Einspritzsystemen für Nutzfahrzeuge geeignet, bei denen in der Regel stromlos geschlossene Ventile zur Realisierung einer Limphome-Funktion eingesetzt werden. Im Fehlerfall, beispielsweise bei Spannungsverlust, Kabelbruch, ECU-Recovery, ist demnach ein Notfahrbetrieb in der Regel gewährleistet. Zur Druckbegrenzung wird zusätzlich ein Druckbegrenzungsventil eingesetzt. Das vorgeschlagene erfindungsgemäße Druckregelventil macht den Einsatz eines zusätzlichen Druckbegrenzungsventils entbehrlich, so dass es sich insbesondere für den Einsatz in Nutzfahrzeugen eignet. Der Einsatzbereich eines erfindungsgemäßen Druckregelventils ist jedoch hierauf nicht beschränkt.

## Patentansprüche

1. Druckregelventil zur Regelung des Drucks in einem Hochdruck-Kraftstoffspeicher einer Brennkraftmaschine, insbesondere in Common-Rail-Einspritzsystemen, mit einem in einer Bohrung (1) axial verschiebbar geführten und von der Druckkraft einer Feder (2) in Öffnungsrichtung beaufschlagten Ventilkolben (3), der bei Bestromung einer Magnetspule (4) entgegen der Druckkraft der Feder (2) und entgegen dem im Hochdruck-Kraftstoffspeicher herrschenden Druck eine axiale Verschiebung in Richtung eines ersten Ventilsitzes (5) erfährt, wobei der Ventilkolben auf ein mit dem Ventilsitz (5) zusammenwirkendes Ventildichtelement (6) einwirkt, und wobei ein zweiter, in einer Ventilplatte (7) ausgebildeter Ventilsitz (8) vorgesehen ist, der mit dem Ventildichtelement (6) in der Weise zusammenwirkt, dass bei fehlender Bestromung der Magnetspule (4) der im Hochdruck-Kraftstoffspeicher herrschende Druck das Ventildichtelement (6) in dichtender Anlage mit dem zweiten Ventilsitz (8) hält,
**dadurch gekennzeichnet, dass** zur Realisierung einer Druckbegrenzungsfunktion die Ventilplatte (7) in der Bohrung (1) axial verschiebbar geführt und von der Druckkraft einer Feder (9) in Richtung des ersten Ventilsitzes (5) beaufschlagt ist, so dass ein Überschreiten eines über die Druckkraft der Feder (9) vorgegebenen maximalen Grenzdrucks zu einer axialen Verschiebung der Ventilplatte (7) und zum Öffnen des Ventils über den zweiten Ventilsitz (8) führt.

2. Druckregelventil nach Anspruch 1,
**dadurch gekennzeichnet, dass** zur Realisierung einer Volumenausgleichsfunktion bei fehlender Bestromung der Magnetspule (4) das Ventildichtelement (6) frei beweglich zwischen den beiden Ventilsitzen (5, 8) angeordnet ist.

3. Druckregelventil nach einem der vorhergehenden Ansprüche,
**dadurch gekennzeichnet, dass** die Ventilplatte (7) eine zentrale Bohrung (10) zur Aufnahme eines Teilabschnittes des Ventilkolbens (3) besitzt.

4. Druckregelventil nach einem der vorhergehenden Ansprüche,
**dadurch gekennzeichnet, dass** die Ventilplatte (7) mit einer Beißkante (11) zur dichtenden Anlage an einem Gehäuseteil oder einer weiteren Ventilplatte (12) des Druckregelventils ausgestattet ist.

5. Druckregelventil nach Anspruch 4,
**dadurch gekennzeichnet, dass** der erste Ventilsitz (5) in der weiteren Ventilplatte (12) ausgebildet ist.

6. Druckregelventil nach einem der vorhergehenden Ansprüche,
**dadurch gekennzeichnet, dass** das Ventildichtelement (6) als Kugel ausgebildet ist.

7. Druckregelventil nach einem der vorhergehenden Ansprüche,
**dadurch gekennzeichnet, dass** Einstellelemente (13), insbesondere in Form einer Einstellscheibe (14) oder einer Einstellschraube (15), vorgesehen sind, die vorzugsweise die Einstellung eines Öffnungsdruckes, eines Restluftspaltes und/oder eines Hubanschlags ermöglichen.

8. Druckregelventil nach einem der vorhergehenden Ansprüche,
**dadurch gekennzeichnet, dass** die elektrischen Anschlüsse zur Bestromung der Magnetspule (4) in einem Deckel (16) angeordnet sind.

## Claims

1. Pressure-regulating valve for regulating the pressure in a high-pressure fuel accumulator of an internal combustion engine, in particular in common-rail injection systems, with a valve piston (3) which is guided in an axially displaceable manner in a bore (1), is acted upon in the opening direction by the compressive force of a spring (2) and, when a magnet coil (4) is energized, undergoes an axial displacement in the direction of a first valve seat (5) counter to the compressive force of the spring (2) and counter to the pressure prevailing in the high-pressure fuel accumulator, wherein the valve piston acts on a valve-sealing element (6) which interacts with the valve seat (5), and wherein a second valve seat (8) formed in a valve plate (7) is provided, said second valve seat interacting with the valve-sealing element (6) in such a manner that, when the magnet coil (4) is not being energized, the pressure prevailing in the high-pressure fuel accumulator keeps the valve-sealing element (6) in sealing contact with the second valve seat (8), **characterized in that**, in order to realize a pressure-limiting function, the valve plate (7) is guided in an axially displaceable manner in the bore (1) and is acted upon in the direction of the first valve seat (5) by the compressive force of a spring (9) such that exceeding the maximum limit pressure predetermined via the compressive force of the spring (9) leads to an axial displacement of the valve plate (7) and to the opening of the valve via the second valve seat (8).

2. Pressure-regulating valve according to Claim 1, **characterized in that**, in order to realize a volume-equalizing function when the magnet coil (4) is not being energized, the valve-sealing element (6) is arranged in a freely movable manner between the two valve seats (5, 8).

3. Pressure-regulating valve according to one of the preceding claims, **characterized in that** the valve plate (7) has a central bore (10) for receiving a subsection of the valve piston (3).

4. Pressure-regulating valve according to one of the preceding claims, **characterized in that** the valve plate (7) is equipped with a bite-in edge (11) for the sealing contact against a housing part or against a further valve plate (12) of the pressure-regulating valve.

5. Pressure-regulating valve according to Claim 4, **characterized in that** the first valve seat (5) is formed in the further valve plate (12).

6. Pressure-regulating valve according to one of the preceding claims, **characterized in that** the valve-sealing element (6) is designed as a ball.

7. Pressure-regulating valve according to one of the preceding claims, **characterized in that** adjustment elements (13), in particular in the form of a dial (14) or an adjusting screw (15), are provided, the adjustment elements preferably permitting the adjustment of an opening pressure, of a residual air gap and/or of a stroke stop.

8. Pressure-regulating valve according to one of the preceding claims, **characterized in that** the electric connections for energizing the magnet coil (4) are arranged in a cover (16).

## Revendications

1. Soupape de régulation de la pression pour la régulation de la pression dans un accumulateur de carburant haute pression d'un moteur à combustion interne, en particulier dans des systèmes d'injection à rampe commune, comprenant un piston de soupape (3) guidé de manière déplaçable axialement dans un alésage (1) et sollicité dans la direction d'ouverture par la force de pression d'un ressort (2), lequel piston de soupape, lorsque du courant circule dans une bobine magnétique (4) à l'encontre de la force de pression du ressort (4) et à l'encontre de la pression régnant dans l'accumulateur de carburant haute pression, subit un déplacement axial dans la direction d'un premier siège de soupape (5), le piston de soupape agissant sur un élément d'étanchéité de soupape (6) coopérant avec le siège de soupape (5), et un deuxième siège de soupape (8) réalisé dans une plaque de soupape (7) étant prévu, lequel coopère avec l'élément d'étanchéité de soupape (6) de telle manière qu'en l'absence de courant circulant dans la bobine magnétique (4), la pression régnant dans l'accumulateur de carburant haute pression retienne l'élément d'étanchéité de soupape (6) en appui hermétique avec le deuxième siège de soupape (8),
**caractérisée en ce que** pour réaliser une fonction de limitation de la pression, la plaque de soupape (7) est guidée de manière déplaçable axialement dans l'alésage (1) et est sollicitée par la force de pression d'un ressort (9) dans la direction du premier siège de soupape (5), de telle sorte qu'un dépassement d'une pression limite maximale prédéfinie par la force de pression du ressort (9) conduise à un déplacement axial de la plaque de soupape (7) et à l'ouverture de la soupape par le biais du deuxième siège de soupape (8).

2. Soupape de régulation de la pression selon la revendication 1,
**caractérisée en ce que** pour réaliser une fonction d'équilibrage du volume en l'absence de courant circulant dans la bobine magnétique (4), l'élément d'étanchéité de soupape (6) est disposé de manière librement mobile entre les deux sièges de soupape (5, 8).

3. Soupape de régulation de la pression selon l'une quelconque des revendications précédentes,
**caractérisée en ce que** la plaque de soupape (7) possède un alésage central (10) pour recevoir une section partielle du piston de soupape (3).

4. Soupape de régulation de la pression selon l'une quelconque des revendications précédentes,
**caractérisée en ce que** la plaque de soupape (7) est pourvue d'une arête d'attaque (11) pour l'appui hermétique contre une partie de boîtier ou une plaque de soupape supplémentaire (12) de la soupape de régulation de la pression.

5. Soupape de régulation de la pression selon la revendication 4,
**caractérisée en ce que** le premier siège de soupape (5) est réalisé dans la plaque de soupape supplémentaire (12).

6. Soupape de régulation de la pression selon l'une quelconque des revendications précédentes,
**caractérisée en ce que** l'élément d'étanchéité de soupape (6) est réalisé sous forme de bille.

7. Soupape de régulation de la pression selon l'une quelconque des revendications précédentes,
**caractérisée en ce que** des éléments d'ajustement (13) sont prévus, notamment sous la forme d'une rondelle d'ajustement (14) ou d'une vis d'ajustement (15), lesquels permettent de préférence l'ajustement d'une pression d'ouverture, d'un entrefer résiduel et/ou d'une butée de fin de course.

8. Soupape de régulation de la pression selon l'une quelconque des revendications précédentes,
**caractérisée en ce que** les raccords électriques pour l'alimentation en courant de la bobine magnétique (4) sont disposés dans un couvercle (16).
